# EUROPEAN PATENT APPLICATION

(11) **EP 2 367 101 A1**
(43) Date of publication of application: **21.09.2011**
(21) Application number: 11169659.7
(22) Date of filing: 18.12.2006
(51) Int. Cl.: G06F 3/147, G06Q 30/00

(54) **Display of an electronic shelf label**

(30) Priority: 23.12.2005 SE 0502921; 23.12.2005 US 597904 P
(62) Divisional of application: 06835939.7
(71) Applicant: Pier AB, 192 79 Sollentuna (SE)
(72) Inventor: Nilsson, Björn, 753 26 UPPSALA (SE); Lindgren, Andreas, 753 25 UPPSALA (SE)
(74) Representative: Ydreskog, Margareta

(57) **Abstract**

The present invention relates to an electronic shelf label, a system including electronic shelf labels, a related method and a computer program, comprising a power source for giving power to a display for displaying product related information, and at least one memory register for storing a product related information, and a communication interface for communicating with an access communication unit from which commands are exchanged, the memory register and the communication interface being controlled by a control unit. The control unit is adapted to control the display of information from the register in dependence of received commands. The electronic shelf label is provided with a label orientation sensor from which the control unit retrieves orientation data, in response to which the control unit controls the electronic shelf label to display either of at least two different predetermined images of product related information.

## Description

### Technical field of the invention

The present invention generally relates to an electronic label, a system including electronic labels, a related method and a computer program.

### Background of the invention

Electronic labelling systems are known in which electronic labels can be placed on shelves, for example, in grocery stores, to serve as price tags. The electronic labels substitute traditional printed paper labels and need not be manually attached to merchandise. The information displayed on the labels can be updated from a central unit communicating with the labels via wireless communication, such as infrared (IR) communication or radio frequency (RF) communication. Systems of the above kind are often referred to as Electronic Shelf Labelling systems (ESL), but the labels do not necessarily have to be placed on shelves. Instead, the labels can hang from the ceiling or be displayed in some other way, such as being placed on a needle and attached to specific food product in a deli counter. In this document, the phrases electronic label and electronic shelf label are used interchangeably and should not be restricted to labels intended to be attached to shelves.

It is known to let each label comprise a number of registers, or pages; one of which can be displayed at any given time. The information to display can be controlled from the central unit, or from various kinds of handheld devices used, for example by the staff in a grocery store. In addition to price information the labels can hold other types information, such as special offers, the number of items of a particular product still in stock, the expected number of merchandise on the shelf and space management information. Normally, at least the price information and the product concerned is displayed on the electronic price label.

The published international patent application WO 2005/085989 discloses an electronic shelf label and an electronic shelf label system with registers for holding information. The application also discloses a control unit for wirelessly controlling the display of information from the registers in dependence of command inputs. US2002/0109603 discloses an electronic shelf label system and an electronic shelf label including a display for displaying product related data, a power source, a memory register, a communication interface and a control unit. The display includes an additional segment for reflection of light to a relay to acknowledge receipt of information from a host computer system.

US2002/0034067 discloses an electronic shelf label system and an electronic shelf label including a display for displaying product related data, a power source, a memory register, a communication interface and a control unit. The display includes an additional LED display for sales alert lighting.

Personnel working in environments where information relating to merchandise is required need to be informed about the product for sale, and some of the information needed is specific and primarily or exclusively intended for personnel. An example is staff behind a counter in a deli or grocery store, and the information meant may relate to the last day of consumption for example, or to the number of items of a particular product still in stock. In such situations, the information needs to be presented, although the specific information is primarily intended for the staff only, since it is of little or no use for customers. Today, paper labels are often placed on a needle, placed and attached with a particular merchandise, and even provided with handwritten notes containing specific information in addition to what is displayed to the customer. However, just as the case for electronic shelf labels intended to display information to customers, there is a need for the staff-related product information to be clearly visible, readily updated and exchanged when necessary, and to enable this from a centralised management unit.Consequently, there is a need to increase the information content provided for by the electronic shelf label including customer related product information as well as staff-related product information. When increasing the information content on display in an electronic shelf label there is a demand for increased legibility of the labels. There is a need to provide a clearly visible and legible layout of an electronic shelf label.

### Summary of the invention

It is therefore an object of the present invention to achieve enhanced differentiation, manageability and visibility with respect to the display of information between receivers of product related information.

This object is accomplished by an electronic shelf label and a system comprising electronic shelf labels, comprising
a power source for giving power to a display for displaying product related information,
at least one memory register for storing a product related information, and a communication interface for communicating with an access communication unit from which commands are exchanged, the memory register and the communication interface being controlled by a control unit,
the control unit being adapted to control the display of information from the register in dependence of received commands,
characterised in that a label orientation sensor is provided, from which the control unit retrieves orientation data, in response to which the control unit controls the electronic shelf label to display either of at least two different predetermined images of product related information.

In a specific embodiment of the invention the the electronic shelf label is provided, in addition to the display for displaying product related information, with an additional display of information.

The advantages of the above described invention are numerous. A particular advantage applies as a result of having the additional display mounted on the electronic shelf label and directed so as to be visible from behind, conceivably by staff in a grocery store or deli. Information about products, such as space management information, number of products still in stock, allergy or hypersensitiveness information intended primarily for staff, but also relating to expiry dates of food products, often change with short notice. Such short intervals are difficult to keep up with using a manual system and therefore, product related information risk being out of date. Moreover, in a grocery store, an alternating and sometimes a considerable number of staff may be serving customers, but only a few of the staff are responsible for updating product related information. Instead of having this additional responsibility distributed on the staff, such information can be input, updated and distributed from a central management unit.

Another advantage of the present invention is that the additional display is driven and controlled without any additional driving and control means. No expensive extra components are thus necessary in order to get the additional display operable. Since the vertical axis of the additional display is to be mounted on the electronic shelf label and to be directed with an adjustable angle to the vertical axis of the display for product related information, the label can be adjusted so as to be optimal with respect to the visibility from behind. In one particular embodiment, the angle between the axes is 30-60 degrees, and preferably around 45 degrees, since this range of angles has turned out to be of excellent visibility, in particular in situations where staff are standing behind a low counter containing food products.

### Brief description of the drawings

The features, objects, and further advantages of this invention will become apparent by reading this description in conjunction with the accompanying drawings, in which like reference numerals refer to like elements and in which:
Fig 1 illustrates an overall view of an electronic labelling system in accordance with prior art.
Fig 2 shows a front view of an electronic shelf label, the label in accordance with the present invention.
Fig 3 is a logical schematic diagram of an electronic shelf label, for example the label of Fig 2.
Fig 4 discloses a front view of a construction in which the display of the electronic shelf label is segment based in accordance with one embodiment of the present invention.
Fig 5 shows an electronic shelf label using an external processor according to one of several constructional alternatives of the invention.
Fig 6 is a schematic view of a central unit used according to one of several constructional alternatives of the invention.
Fig 7 illustrates a first embodiment of a respective front, side and backside view of the electronic shelf label with an additional display according to the present invention.
Fig 8 illustrates a second embodiment of a respective front, side and backside view of the electronic shelf label with an additional display according to the present invention.
Fig 9 illustrates a third embodiment of a respective front, side and backside view of the electronic shelf label with an additional display according to the present invention.
Fig 10 illustrates a fourth embodiment of a respective front, side and backside view of the electronic shelf label with information displayed backwards according to the present invention.
Fig 11 illustrates a turnable display at upright and lying positions, i.e. portrait orientation and landscape orientation, according to the present invention.

### Detailed description

The following description is of the best mode presently contemplated for practising the invention. The description is not intended to be taken in a limiting sense, but is made merely for the purpose of describing the general principles of the invention. The scope of the invention should only be ascertained with reference to the issued claims.

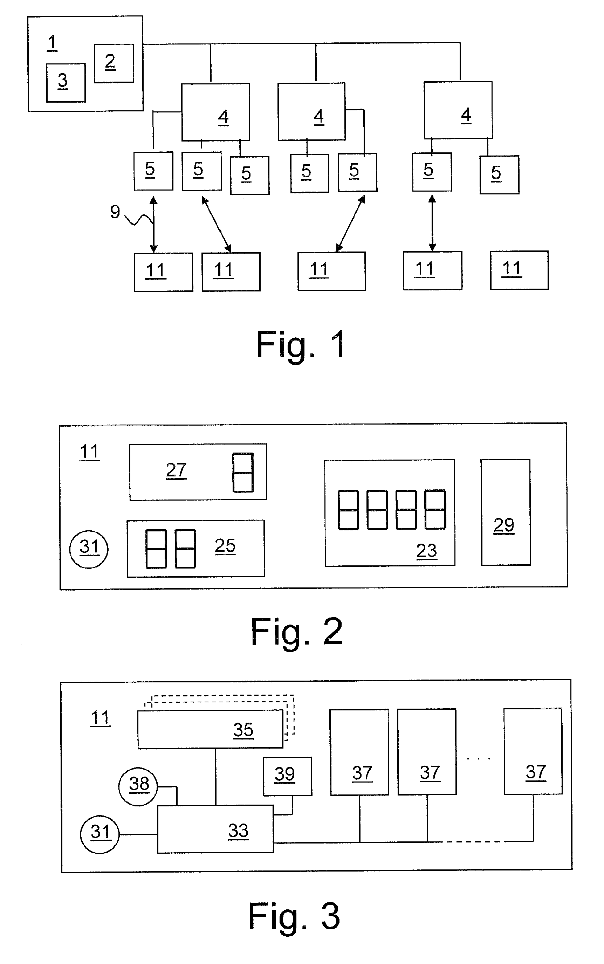

Figure 1 shows a conventional electronic labelling system, based on infrared (IR) communication or radio frequency (RF) communication. The system could also be based on any other wireless transmission technologies known in the art, such as USB radio or wireless LAN (local area network) transmission. A central unit 1, which may be based on a personal computer (PC), comprises server software and acts like a server in the system. The central unit 1 comprises a processor 2 and a memory 3. Alternatively, the memory, or at least part of it, may be an external unit connected to the central unit. One or more base stations 4 are connected to the central unit, for example by Ethernet connections or by serial communication. To each base station 4 are connected a plurality of transceivers 5. The base stations handle modulation and frequency generation for the carrier wave. The modulation may be pulse position modulation.

In accordance with one exemplary embodiment of the present invention, IR communication is used. The transceivers according to this embodiment convert the electrical signals received from the base station to IR signals and transmit these IR signals through an IR communication interface 9 to a number of electronic shelf labels 11. The transceivers also receive IR signals transmitted from the electronic shelf labels and convert them into electrical signals that can be read by the respective base station. The electronic shelf labels are battery-powered stand-alone price tags. Another possible power source could be generated by photovoltaic technology, for example by solar cells.

Fig 2 depicts a front view of one embodiment of an electronic shelf label including segment-based price indications. The electronic label comprises a first price field 23 for displaying the price per item of the product, a second price field 25 for displaying the price per unit, for example, per kilo of the product, a third price field 27 for displaying other information, for example about a special offer. Each field 23, 25, 27 is comprised of a number of digits, where each digit can be written as a combination of seven segments. An indicator field 29, for example, comprising only one segment, may be used, for example, to display a red light to indicate a discount. The indicator field could also be replaced by for example a red light-emitting diode (LED) or similar eye-catching element. Of course, the fields 23, 25, 27, 29 may be arranged in a different way, and/or used for displaying other types of information as desired. Also, in accordance with another embodiment, the display may be of a graphical type, such as a so-called dot matrix display.

Fig 3 is a general logical view of the electronic shelf label of Fig 2. Each electronic label has its own individual address. For receiving commands and information updates from the transceivers 5 in the system, or if applicable from a handheld unit, the label comprises a receiver, in this case an IR receiver 31, connected to a control unit 33 in the label. The control unit receives and acts on commands and information received, in a manner well known to the skilled person. The electronic label may also comprise a transmitter in addition to the receiver, or a transceiver unit, to enable two-way communication. The control unit controls one or more displays 35 corresponding to the fields 23, 25, 27, and 29 of Fig 2. The label comprises a number of registers 37 connected to the control unit, each comprising a particular piece of information, typically a page of information. The control unit controls the display of information comprised in the registers on the display or displays. The control unit also controls the update of each register using information received through the receiver. The control unit can be part of an Application Specific Integrated Circuit (ASIC) including all memory and processing functions needed in the label. Alternatively, the control unit can be a microprocessor, which may be relatively simple in its construction.

Optionally, the label also comprises sound generating means 38, for generating a sound to attract attention, for example because an error state has been detected in the label. The label may also comprise timing means 39 for various timing functions.

Each label comprises communication means including at least a receiver and possibly a transmitter, connected to a control unit which may be arranged to drive the display, and each label has its own address. Only a limited amount of information can be shown on one individual label, and each label has to be updated individually. In a prior art electronic shelf label the control unit is typically able to control 184 segments, which may be used, for example, to form 26 characters and two additional segments.

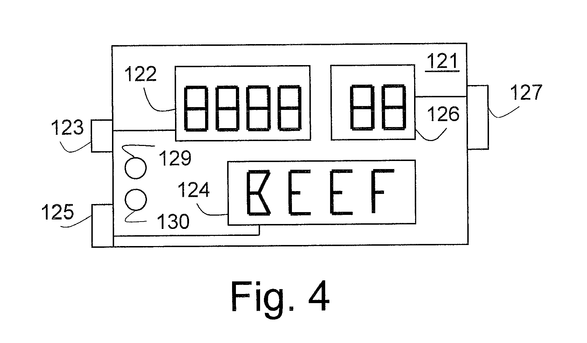

Fig 4 discloses one embodiment of the present invention, in which the display of the electronic shelf label 121 is segment based. In this case the segments of the display are divided into segment groups 122, 124, 126, corresponding to display areas, wherein each control circuit 123, 125, 127 is arranged to control one such segment group. Several control units, one master and one or more slaves may also be used to control one label. However, master-slave configurations of electronic shelf labels go beyond the scope of the present invention and will not here be further elucidated. Communication means including a transmitter 129 and a receiver 130 are arranged for communicating with the central unit of the electronic labelling system, preferably through a wireless connection, said communication means are connected to one of the control circuits for the label.

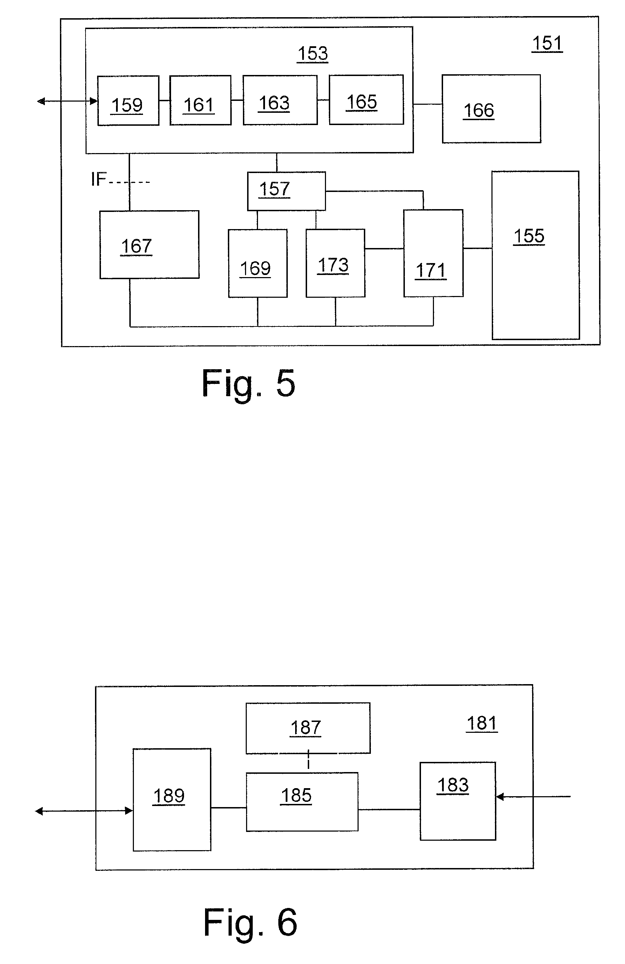

Fig 5 shows an electronic shelf label 151 according to a further aspect of the invention. As is common in the art, the label comprises control unit 153, a dot matrix display 155 and a power source 157 giving power to the control unit and at least one display driver. The control unit comprises a communication interface 159 which is adapted to communicate, preferably wirelessly with a central unit in the electronic shelf label system. A wireless communication arrangement using for example IR or radio, such as a wireless USB radio LAN (local area network) interface, is preferred. The central unit is actually connected, wirelessly or by cable, to at least one an access communication unit, a transceiver that is adapted to receive, and in the case of a bi-directional communication system also to transmit, data wirelessly to and from a plurality of price labels. The communication interface according to the invention is adapted to receive updated information from the central unit and also, if applicable for the type of display and for the information being transmitted, positioning information about where in the dot matrix display this information is to be shown. The updated information is usually a new price for the product related to this specific price label, but it could also be other kinds of product information that should be updated.

The control unit further comprises a processing means 161 connected to the communication interface. This processing means is adapted to process the received information and relate this to the image displayed on the dot matrix display. This image is also stored in a memory or other storing means 163 connected to the processing means. The processing means is adapted to store the received updated information in the correct position of the image in the storing means.

According to the present invention when applying IR communication technology, the control unit has an interface (IF) to a microprocessor 167 or other corresponding processing means for controlling the IR receiver and IR transmitter. The microprocessor is preferably powered from the power source 157. The microprocessor is part of the electronic shelf label, and could either be part of an integrated circuit (IC) of the electronic shelf label or it may be an external component outside of the integrated circuit. The microprocessor could be connected to a memory 169 in case the storage capacity of the built-in memory would not be sufficient. It also controls a display driver 171 for driving the dot matrix display and a DC/DC converter 173, effectively a voltage pump, for up-converting the voltage provided by the power source to a sufficiently high voltage to update the display. Also, the control unit and the microprocessor can share one memory instead of controlling separate memories 163, 169 as has previously been described.

Connecting an additional display to an already present forward directed display is particularly useful in cases when the display directed forwards is controlled either by the control unit or by an external central processing unit. The driving means may then either be incorporated in the external central processing unit or in a separate circuit.

According to the present invention, the control unit is able to send a signal command to the microprocessor to leave the idle mode, i.e. to wake it up, when this is needed. When in active mode, the micro-processor controls the communication channel, for example for receiving update data from the system. The control unit 153 is used for polling. Polling is at regular intervals to check whether information intended for a label has been received or not. This polling procedure involves checking the address field of the information frames received to determine if there is a match with the address of the label. If so, the internal control unit provides a signal to the microprocessor to activate the receiving functionality in order to control the reception of information.

The interface IF between the micro-processor and the internal control unit in this particular embodiment is a serial data bus with a data clock and some additional control signals, such as the enable signal that is used to wake up the microprocessor. The power to the microprocessor could be part of the interface to enable a complete shut-down of the microprocessor. Alternatively, the microprocessor could be connected directly to the power source, if it has a sleep mode with low current consumption. In this way, sufficient processor capacity is available when needed, for example, for information updates. At the same time, since the processor is only active and consuming power when it is really needed, the excess power consumption is effectively minimised.

Fig 6 is a schematic view of a central unit 181 adapted to communicate wirelessly, for example via IR or radio, with price labels according to the invention. The central unit is connected to for example a cash register and databases comprising information that can be updated in the price labels. Normally the central unit is placed in a computer that could also comprise for example the cash register in a store. Price changes and other updated information is received in a receiving means 183 in the central unit from for example a price data base. The communication interface 189 is adapted to send the updated information to the price label having the address given by the processing means 185. The processing means in the central unit is further adapted to store the new, updated image in the storing means 187 such that the images in the storing means always are updated and correspond to the images shown on the price labels.

A graphical type of display, such as the dot matrix display will in low power applications, like in electronic shelf labels, require a particular kind of display. Such a display is often bi-stable, which here means that no power is consumed by the display as long as no changes are made on the display. Bi-stable displays often require driving electronics adapted for the particular application, and the present invention includes such drivers when necessary. Electronic Paper and E-paper are common trade names for this kind of displays.

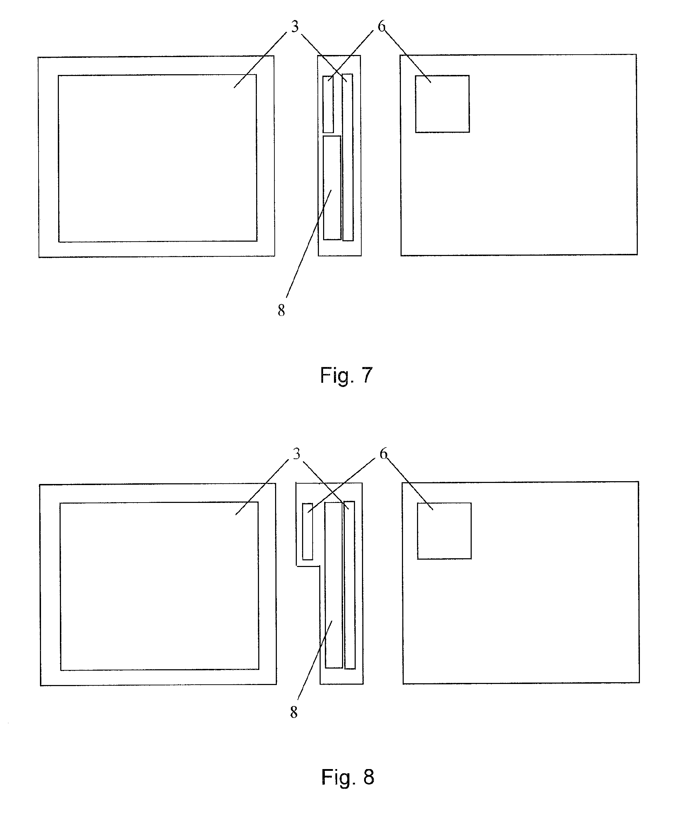

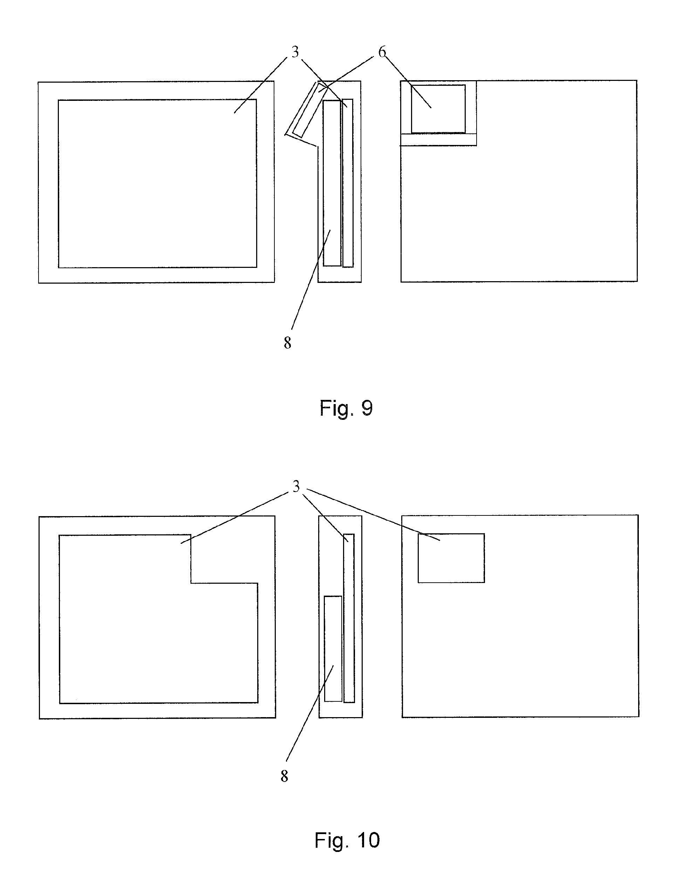

With reference to Figs 7, 8, 9, an electronic shelf label is illustrated having an additional electronic label mounted so as to be visible from behind. In Fig 10, the additional electronic label does not include an additional display, but is still visible from behind due to a constructional feature. For simplicity reasons, the figures are drawn with square shaped parts, but of course in a real allocation the shapes could as well be rounded and may differ from these embodiments.

Referring in particular to Fig 7, a control unit is provided in accordance with the previous description, which control unit is adapted to control the communication interface means as well as the both of the displays, i.e. the display 3 directed so as to be visible from the front and the additional display 6 directed to be visible from behind. Reference numeral 8 denotes a printed circuit board. In this particular embodiment, it can be seen that the additional display is mounted side by side with the printed circuit board, in order to form a thin electronic shelf label. The additional display is not always intended to be visible by customers, and thus, the requirements on layout and clarity is less demanding as long as the information displayed is legible by staff and can be updated regularly or when necessary. The control unit may be dedicated to control communication in a low power manner. In case the control unit does not include display controller and driving means, there may be a need for a secondary microcontroller or similar kind of central processing unit and an external driver to drive either or both of the display panel and the additional display. In one embodiment, the previously mentioned ASIC or other similar control means as an integrated circuit of the electronic shelf label includes driving means for an additional display. However, in cases when the driving means does not offer this internal driving capability, an additional microcontroller may be necessary to include in the electronic shelf label, either with integrated driving capacity or as a control means for controlling an external display driving means.

The additional display 6 can be added in a number of ways. One of the ways is to connect the display directly to the control unit. This requires that the control unit includes a controlling means and a driving means for driving the additional display. In some applications known according from related art, the control unit is constructed so as to support segment based displays of limited number of segments. However, in cases where the control unit includes a driver or is provided with internal driving capability, it is both convenient and cost efficient to add a second display, i.e. the additional display, in addition to the first display directed towards the consumer. Therefore, adding a second display in accordance with the present invention does not require additional components and may be done without more than slightly adapting the previous construction, why the addition can be made at limited costs and efforts.

In accordance with one of the specific embodiments described, a forward directed display 3 is included that requires other driving means than the driving means integrally constructed with the integrated circuit of the electronic shelf label. It will thus be possible for the additional display 6 to make use of the already present and built-in driving means, which currently is not in use. Thus an additional display does not require an extra driver or other additional components, apart from uncomplicated and inexpensive connectors, thereby adding hardly any costs to the application having an additional display. An example of such a display of an electronic shelf label is the so-called electronic paper application, having a bi-stable and forward directed electronic display.

An alternative way of constructing the electronic shelf label with an additional display is shown in Fig 8. The construction is similar to the one presented with reference to Fig 7, but differs in that the printed circuit board 8 and the additional display are stacked to form an electronic shelf label with a minimised label surface area. The area is minimal as seen from the customer perspective, and the advantage is for instance that it is easiest to place the electronic shelf label in a tight and limited shelf environment.

Fig 9 illustrates an embodiment in which the vertical axis of the additional display is to be mounted on the electronic shelf label and to be directed with an adjustable angle to the vertical axis of the display for product related information. Moreover, the additional display of the electronic shelf label can be adjusted so as to be optimal with respect to the visibility from behind. In one particular embodiment, which is depicted in Fig 9, the angle between the axes is 30-60 degrees, and preferably around 45 degrees, since this range of angles has turned out to be of excellent visibility.

In addition to the aforementioned alternative embodiments referring to Figs 7, 8 and 9, a further optional construction for certain displays is illustrated in Fig 10. A display which can be displaying so as to be viewed from both sides, i.e. displaying both in the forward and rear directions, may be partly exposed. This is realised in that parts of the display are arranged so as to display from the front surface and another part of the display surface from the backside. This embodiment adds no cost to the device, but of course decreases the usable front surface display size, which has no disadvantages provided sufficient amounts of information can be displayed without using the whole area of the electronic shelf label. Since a dot matrix display type of display is able to show generous amounts of information, it is conceivable that parts of the dot matrix display will not be required, and thus may be unused. The casing of the electronic shelf label will block parts of the display on the front side and open up the same parts of the additional display from the backside. The embodiment is particularly useful when there is no space available for an additional display in the embodiments comprising specific casing arrangements according to the previous Figs 7, 8 and 9.

However, as an alternative to the previous embodiment, the technology can be adapted for keeping both the front and rear sides uncovered on certain parts of, or on all of the display, and in this way get full display surface on both the front side and on the rear side. This is a way of obtaining a double-sided display. Such an embodiment requires the electronics to be hidden behind small electronic boards, since all electronics and batteries should be mounted outside the viewing area of the display. Mechanically this can be realised in a number of ways. The described double-sided display functionality makes it possible to display at least symmetrical symbols and coloured fields, e.g. denoting special offers, in both the forward and backward directions of the electronic shelf label.

In accordance with second aspect of the present invention, which may be indirectly and independently described, but still is related to the previous aspects, control means are provided to enable positioning the electronic shelf label. The electronic shelf label may be oriented both in an upright position, i.e. portrait orientation, and in a lying position, i.e. in a landscape orientation, without loosing visibility or clear understanding of the information displayed.

From technology in a field remotely related to the field of electronic price indications, it is known that for example a digital camera has a functionality which enables sensing of the orientation of the camera. Moreover, is possible in modern digital cameras to save an image in correspondence with the actual orientation of the image, so as to always present a photograph or other image in the right direction to the viewer, i.e. in most cases with the ground down and the sky up. To accomplish the above, a digital camera is equipped with a sensor, the sensor being mounted in the camera itself or in a similar device in which images are saved.

The object of the second aspect of the present invention is therefore to enable display of information with a clearly visible and legible layout taking into account the orientation of the electronic shelf label.

This object is achieved by an electronic shelf label, a system comprising electronic shelf labels, a method and a related computer program, comprising
a power source for giving power to a display for displaying product related information,
at least one memory register for storing a product related information, and a communication interface for communicating with an access communication unit from which commands are exchanged, the memory register and the communication interface being controlled by a control unit,
the control unit being adapted to control the display of information from the register in dependence of received commands,
characterised in that
a label orientation sensor is provided, from which the control unit retrieves orientation data, in response to which the control unit controls the electronic shelf label to display either of at least two different predetermined images of product related information.

As indicated above, an electronic shelf label system could also be equipped with a sensor. Such a sensor would then be mounted in the electronic shelf label, even though the creation of the images are not done within the actual label, but rather in a central device, such as a server of the computer-controlled base station (4), or possibly in access communication unit (1), with which the electronic shelf label communicates. Also the orientation of the reading device can be changed at a later stage.

This sets other requirements on the construction and the structure of the electronic shelf label system. It is necessary that the electronic shelf label is enabled to sense the direction of the display and to show the image correctly, also with a layout that is optimised for displaying relevant product related information in either of the two possible orientations.

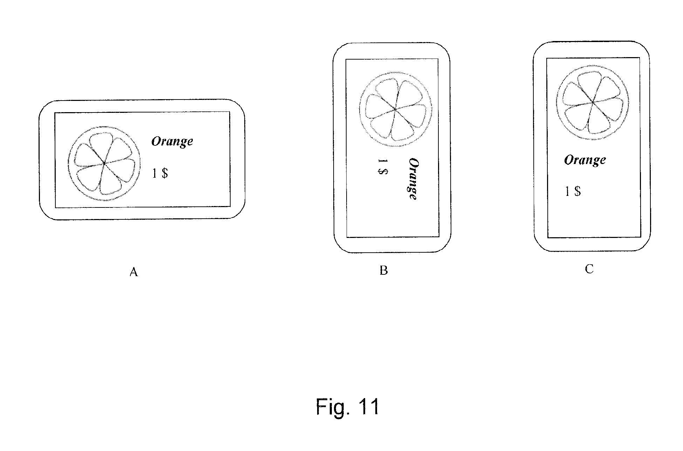

Hence, two different images need to be accessible within the electronic shelf label. A change or re-calculation of present formats would not yield the optimised layout, and therefore, two images are stored with different formats. With reference to Fig 11, three layouts are shown. A first image with layout that supports an electronic shelf label which is mounted in the landscape orientation and one image in which the layout is optimised for and electronic shelf label which is mounted in the portrait orientation. As a result of those requirements, the electronic shelf label needs a sensor sensing whether the label is mounted in the landscape orientation or in the portrait orientation, and logic that is adapted to select or create the appropriate image to display.

An electronic shelf label of the graphical display kind, such as a dot matrix kind of display has a capability of presenting any information on the display. This capability also enables a possibility of selecting in what orientation the display is to be used in different parts of environment in which the electronic shelf label is to be used. In a retail store this could for instance be different parts of the store. The vegetable section is a place of frequent movements and where it sometimes is beneficial to use landscape oriented displays and sometimes portrait oriented display, not least for reasons of strict restrictions in space available, such as in the deli of a grocery store or other counter.

In one embodiment of the present invention, the electronic shelf label includes a display of the graphical information kind, in which the display technology is of the type dot matrix display, preferably with a relatively high resolution. The display content is preferably stored in a memory within the electronic shelf label and in certain applications, several images are stored in a image memory either as raw pixel data or as a coded information that can be converted to raw pixel data prior to the process of updating an image. Decompression may be necessary, but if the image memory is adapted to contain raw pixel data information, there will be no need for decompression of the data.

In the case where raw data is stored in the memories, the previously mentioned server needs to create the both images to be used for showing the information in a landscape orientation and in a portrait orientation. The information label will receive the information and update the memory with both the images. The orientation sensor (not shown) senses the orientation and if the orientation changes the image is automatically rotated to support the true orientation of the display in the store.

In the case that coded information are stored in the electronic shelf labels, the labels need to build up the final images from the data. Two basic types can be identified, a first type and a second type. In the first type the transmitted data from the server to the electronic shelf label is coded but when the data information transfer is done the images are directly converted from the coded form to the raw pixel data form and hence the sensing and changing of images are done as described above.

The second type that use coded information transmit the data in coded form and also keep the data in this form in the information label memory registers. In this case there must be another memory in the display keeping information on layout of the device. The layout includes information like a background image that is same for all displays within one department of a store or similar and text that always shall be written on the information label used in that department.

When the orientation is changed and the layout shall be changed there is a need of first create the new image using the layout information, the data information form register and the function that is used to merge this information and create a raw pixel data image for the new picture. In some embodiment this information of the image last updated is stored in a register but it is not necessary for the operation. This method is preferable if very large data images are to be updated to save the memory needed. However, even if this today puts high demands on speed of the creation of the raw pixel data image, processor speed generally increase very fast. It will therefore in a few years be a conceivable solution for use.

The orientation sensor is polled once every second or similar to reduce power consumption. As long as orientation is not changed no action is taken. When new orientation is sensed the layout are changed according to descriptions above. Alternatively, the orientation sensor could be activated by a command from the control means in order to update the orientation of the image in order to further reduce the consumption of current required for polling. This update command may be a broadcast command transmitted from the control unit or by a portable unit, such as a handheld communication device. This has the advantage that the electronic shelf label can be updated directly after having been positioned.

Fig 11, which has also previously been referred to, shows a sequence of an image on a landscape oriented information on an electronic shelf label (A). The image information label is turned 90 degrees to be portrait oriented but with text readable only if face orientation is horizontal (B) making it very difficult to read. In order to achieve a good legibility and optimal layout, another image must be shown. Using the orientation sensing mechanism followed by the control unit giving the command to display another image will after finalising the updating of the display and changing the layout to a portrait type enable easy and clear reading of the information on the electronic shelf label (C).

## Claims

1. An electronic label (11) comprising
a power source (157) for giving power to a display (35) for displaying product related information,
at least one memory register (37) for storing a product related information, and a communication interface (5, 9) for communicating with an access communication unit (4, 5) from which commands are exchanged, the memory register and the communication interface being controlled by a control unit (33),
the control unit being adapted to control the display of information from the register (37) in dependence of received commands,
**characterised in that**
a label orientation sensor (not shown) is provided, from which the control unit retrieves orientation data, in response to which the control unit controls the electronic shelf label to display either of at least two different predetermined images (A, C) of product related information.

2. An electronic label according to claim 1 **characterised in that**
the power source being adapted to drive a display driver, which is controlled by the control unit.

3. An electronic label according to claim 1, **characterised in that**
the communication interface being adapted for bi-directional communication including receiving commands and transmitting status information.

4. An electronic label according to claim 1, **characterised in that**
the label is provided with commands received from the access communication unit being update information messages and/or display activation commands.

5. An electronic label according to claim 1, **characterised in that**
the predetermined images are either displaying product related information in a landscape orientation (A) or in a portrait orientation (C).

6. An electronic label according to claim 1, **characterised in that**
the predetermined images have formats adapted to display product related information independent of each other.

7. An electronic label system comprising a computer-controlled base station (4) communicating with at least one access communication unit (1), which unit is adapted for wireless communication with a plurality of electronic shelf labels (11) to determine and display product related information, **characterised in that**
the electronic shelf labels of the system include means according to anyone of claims 1-6 .

8. An electronic label system according to claim 7, **characterised in that**
the computer-controlled base station (4) and the access communication unit (1), are integrally constructed.

9. An electronic label system according to anyone of claims 7-8, **characterised in that**
the wireless communication is realised by means of an infrared (IR) interface.

10. An electronic label system according to anyone of claims 7-8, **characterised in that**
the wireless communication is realised by means of a radio frequency (RF) interface, such as a USB radio LAN interface.

11. An electronic label according to claim 1, **characterised in that**
the electronic shelf label is provided, in addition to the a display for displaying product related information, with an additional display of information.

12. Method in an electronic label system, comprising the steps of
storing in a memory register (37) product related information in a plurality of versions, each version adapted to the respective orientation of at least one display (35, 6) mounted on an electronic shelf label (11),
determining by means of an orientation sensor (not shown), the orientation of the electronic shelf label and thus the display,
a control means retrieving information from the orientation sensor about the current orientation of the electronic shelf label,
in response to the sensed orientation, controlling the electronic shelf label to display information adapted in correspondence with the sensed orientation.

13. Computer program in an electronic label system for controlling communication between the control unit (33) and electronic shelf labels (11), the program being adapted for carrying out the method steps according to claim 12.

14. Computer program in an electronic label system for controlling communication between the control unit (33) and electronic shelf labels (11) according to claim 21, comprising
a computer readable medium, and
the computer program according to claim 13, the computer program being recorded on said computer readable medium.

15. Computer program in an electronic label system for controlling communication between the control unit (33) and electronic shelf labels (11) according to claim 13, wherein
the computer readable medium is a propagated signal and the propagated signal is a carrier wave.
